Europäisches Patentamt

(19) European Patent Office

Office européen des brevets

(11) EP 0 770 421 A1

## (12) EUROPEAN PATENT APPLICATION

(43) Date of publication:
02.05.1997 Bulletin 1997/18

(51) Int. Cl.⁶: **B01D 53/94**, B01J 37/03, B01J 21/04, B01J 23/50

(21) Application number: 96102088.0

(22) Date of filing: 13.02.1996

(84) Designated Contracting States:
CH DE FR GB IT LI NL SE

(30) Priority: 25.10.1995 JP 299328/95
25.10.1995 JP 299329/95

(71) Applicant: NIKKI CHEMICAL CO., LTD.
Chiyoda-ku, Tokyo (JP)

(72) Inventors:
• Iriyama, Yoshihiro
Niitsu-shi, Niigata (JP)
• Furuya, Minoru
Niitsu-shi, Niigata (JP)
• Honma, Michiaki
Niitsu-shi, Niigata (JP)
• Kojima, Mitsuo
Niitsu-shi, Niigata (JP)

(74) Representative: Modiano, Guido, Dr.-Ing. et al
Modiano, Josif, Pisanty & Staub,
Baaderstrasse 3
80469 München (DE)

### (54) Catalyst for removing nitrogen oxides

(57) Catalysts for removing nitrogen oxides used in the presence of hydrocarbons or oxygen-containing organic compounds, which comprise alumina as a porous heat-resistant carrier, prepared by hydrolysis of an organic aluminium compound, and at least one member as an active component, selected from silver and a silver compound and carried on said carrier, said alumina carrier being replaceable with a silica-alumina containing 0.5 to 15 weight % of silica.

## Description

### Background of the Invention

#### 1. Field of the Invention

The present invention relates to a catalyst for removing nitrogen oxides and more particularly to such a catalyst which enables nitrogen gases contained in exhaust gases having a high oxygen content such as those discharged from lean-burn gasoline engine cars, diesel engine cars or boilers, to be removed from the exhaust gases for rendering them harmless.

#### 2. Prior Art

For the purpose of preventing air pollution, it has recently been urgently required to remove nitrogen oxides from exhaust gases having a high oxygen content such as those discharged from lean-burn gasoline engine cars, diesel engine cars, co-generation power generators or boilers.

Generally as a method for removing nitrogen oxides from exhaust gases containing a high density of oxygen, an ammonia reduction method in which a $V_2O_5/TiO_2$-based catalyst is used, is well known, and this method is employed for selectively reducing nitrogen oxides with ammonia thus converting them to harmless nitrogen. However, this method uses therein ammonia which is dangerous, and therefore it can hardly be applied to the treatment of exhaust gases from a moving source such as a car. Further, this method requires a large scale facility to be carried out thereby, so that it is not suited to removal of nitrogen oxides discharged from a limited space such as a car.

For the reasons as described above, it has been expected to develop a method of removing nitrogen oxides using a safe reducing agent and enabling space reduction in place of the ammonia reduction method. For instance, Japanese Pat. Appln. Laid-Open Gazette No. Hei 4-281844 (No. 281844/92) discloses a method of converting nitrogen oxides to nitrogen by adding propylene as a reducing agent, to exhaust gases containing nitrogen oxides and contacting the mixed gases with an $Ag/Al_2O_3$-based catalyst, and also Japanese Pat. Appln. Laid-Open Gazette No. Hei 4-367740 (No. 367740/92) proposes a method of removing nitrogen oxides from gases containing nitrogen oxides, oxygen and ethylene as a hydrocarbon by contacting the gases with a catalyst containing Fe in ZSM-5 having a molar ratio of $SiO_2/Al_2O_3$ in a range from 20 to 60.

However, the conventional-type technology for removing nitrogen oxides as disclosed in Japanese Pat. Appln. Laid-Open Gazette Nos. Hei 4-281844 and Hei 4-367740 described above in which hydrocarbons or organic compounds containing oxygen are incorporated as a reducing agent, is effective for removal of nitrogen oxides in a relatively low temperature region of 400°C or less, but it raises a problem that it is inferior in capability of removing nitrogen oxides in a high temperature region of 500°C or more.

In the technology for removing nitrogen oxides by adding to exhaust gases a reducing agent such as hydrocarbons or organic compounds containing oxygen, it is important for a catalyst used in the reduction process to have such desired characteristics or properties as not to completely oxidize the reducing agent added to the exhaust gases. Catalysts in which silver, silver oxide, a Platinum Group element or the like is supported on a carrier and which are highly capable of completely oxidizing a reducing agent, will promote complete oxidation of a reducing agent added to the system whereby the reducing agent comes to be ineffective as such for nitrogen oxides. This is the reason why the capability of removing nitrogen oxides taught by the conventional technology is low in such a high temperature region.

Further, catalysts which remove nitrogen oxides by reducing nitrogen oxides and in which silver or a silver compound is carried on a porous inorganic oxide such as γ-alumina are disclosed in, for examples, Japanese Pat. Appln. Laid-Open Gazettes Nos. Hei 6-7641 (No. 7641/94) and Hei 6-71175 (No. 71175/94), cannot efficiently carry out removal of nitrogen oxides at such a high temperature, either.

### SUMMARY OF THE INVENTION

It is an object of the present invention to provide a catalyst for eliminating nitrogen oxides which can efficiently remove nitrogen oxides at even high temperatures from exhaust gases contained in an oxidizing atmosphere having a high oxygen content, in the presence of hydrocarbons or oxygen-containing organic compounds, and more particularly to provide a catalyst for eliminating nitrogen oxides which has excellent heat resistance and in which its removal efficiency will less degrade even if sulfur oxides coexist in the exhaust gases.

The present inventors have found that nitrogen oxides can efficiently be removed even at a high temperature by contacting nitrogen oxides in exhaust gases having sulfur oxides and a high oxygen content therein with a catalyst in which silver is carried on a particular porous heat-resistant carrier as a stable compound, in the presence of hydrocarbons or oxygen-containing organic compounds. The present invention has thus been made based on this finding.

Namely the catalyst of this invention for removal of nitrogen oxides is a catalyst for eliminating nitrogen oxides, which is used in the presence of hydrocarbons or oxygen-containing organic compounds and wherein at least one effective or active component selected from the group consisting of silver and silver compounds is carried on alumina prepared by hydrolysis of an organic aluminium compound or silica-alumina containing 0.5 to 15 weight % of silica each as a porous heat-resistant carrier.

In the present invention, at least one member selected from the group consisting of silver and silver compounds is used as an effective component in the catalyst. The silver compounds include silver halogenides such as silver chloride and silver bromide, and other silver compounds such as silver sulfate, silver phosphate and silver oxide. By using silver or such silver compounds as described above, nitrogen oxides can efficiently be removed even at a high temperature of 500°C or more.

The amount of silver or the silver compound (effective component) carried on a porous heat-resistant carrier is preferably from 0.01 to 20.0% by weight of the total weight of the catalyst in terms of silver, and more preferably from 0.05 to 15.0% by weight. If the amount of silver or silver compound used is less than 0.01% by weight in terms of silver based on the total weight of the catalyst, the efficiency of removal of nitrogen oxides will be low, while if it exceeds 20.0% by weight the efficiency of removal of nitrogen oxides will become low at a high temperature.

The porous heat-resistant carrier used in the present invention is alumina prepared by hydrolysis of any organic aluminium compound which is an aluminium alcoholate, or silica-alumina containing silica in an amount of 0.5 to 15 weight %.

The aluminium alcoholate used herein includes aluminium isopropoxide ($Al[OCH(CH_3)_2]_3$), aluminium ethoxide ($Al(OC_2H_5)_3$) or aluminium-t-butoxide ($Al[OC(CH_3)_3]_3$), and the aluminium alcoholate is dissolved in water, and furthermore a large quantity of water is added to execute hydrolysis, and then the resultant aluminium oxide hydrate is dried and calcined at a temperature of 300°C or more to obtain alumina according to this invention.

The alumina thus obtained or silica-alumina shows, when used as a porous heat-resistant carrier for the catalytic component, results in highly efficient removal of nitrogen oxides, and the efficiency of removing nitrogen oxides less decreases even in the presence of sulfur oxides at a high concentration of from around several ppm to around 500 ppm in the exhaust gases. In a case where silica-alumina is used as a carrier for catalyst, the catalyst can also be improved in its heat-resistance.

When either ordinary alumina, such as γ-alumina, prepared from aluminium sulfate or sodium aluminate as the raw material or silica-alumina containing silica in an amount of less than 0.5 weight % or more than 15 weight %, is used as a porous heat-resistant carrier, high efficiency of removal of nitrogen oxides cannot be obtained at a high temperature.

Further, efficiency of removal of nitrogen oxides at a high temperature is furthermore improved by using the catalyst whose porous heat-resistant carrier is prepared by having a certain amount or less of silica contained in the alumina which is obtained by hydrolysis of the organic aluminium compound used in the present invention, but the silica content in said carrier must be not more than 15 weight %. When the content of silica is more than 15 weight %, the above specific efficiency of the particular alumina with regard to removal of nitrogen oxides at a high temperature will be impaired.

Silver or the silver compound used in the present invention is generally carried on the alumina which is an oxide, but it may also be carried on aluminium oxide hydrate not having been thermally decomposed, followed by heat treating the whole to obtain a catalyst of the present invention.

There is no specific limitation on a method of having silver or the silver compound carried on a porous heat-resistant carrier, and there are used any applicable method including a method which comprises suspending the aforesaid carrier particles in, for instance, a silver nitrate aqueous solution, thereafter incorporating in the resulting suspension an aqueous solution of a water-soluble chlorine compound such as ammonium chloride or sodium chloride to deposit the resulting silver chloride on the carrier and then heat treating the whole to produce a desired catalyst.

The catalyst for making nitrogen oxides harmless according to the present invention as described above is ordinarily turned into an aqueous slurry, the slurry is adhered on a honeycomb form by wash coating, and the whole is calcined to obtain a honeycomb catalyst.

The removal of nitrogen oxides using the instant catalyst for removing nitrogen oxides is executed in the presence of hydrocarbons or organic compounds containing oxygen. The reason for this is that nitrogen monoxide in exhaust gases having a high content of oxygen is oxidized by the oxygen to produce nitrogen dioxide which needs hydrocarbons or oxygen-containing organic compounds as a reducing agent for its reduction.

The hydrocarbons used herein include olefinic hydrocarbons such as ethylene and propylene, paraffinic hydrocarbons such as propane, and aromatic hydrocarbons such as toluene and xylene. Furhter, the oxygen-containing organic compounds include alcohols such as ethyl alcohol, methyl alcohol, propyl alcohol, ethylene glycol and propylene glycol; and ketones such as acetone, ethylmethyl ketone and methyl propyl ketone.

The catalyst of the present invention comprises silver or the silver compound which is stable and undecomposable even at a high temperature, and as the carrier for the catalyst a porous heat-resistant carrier composed of the aforesaid particular alumina or the silica-alumina containing a certain quantity of silica. In this catalyst, the particular alumina which is a porous heat-resistant carrier is extremely high in purity, and the particular alumina or the silica-alumina is stable in structure for use in an atmosphere in which steam coexists. For this reason, the catalyst of the present invention not only performs efficient removal of nitrogen oxides even at a high temperature in an atmosphere containing steam in an amount of around 10 volume % and sulfur oxides in an amount of several ppm to around 500 ppm, but also retains its stable capability of removing nitrogen oxides for a long period of time. Moreover, the silica-alumina containing a certain quantity of silica may prevent the surface area of the alumina from decrease and enhance the catalyst in heat resistance.

DESCRIPTION OF THE PREFERRED EMBODIMENTS

The present invention will be better understood by the following Examples and Comparative Examples.

Example 1

4.14 g of silver nitrate were added into 250 g of pure water to obtain a solution. The solution kept at a temperature of 40°C was incorporated with 100 g of powdered aluminium oxide hydrate prepared by hydrolysis of aluminium isopropoxide and then agitated to obtain a suspension. The suspension so obtained was incorporated over a period of time of 15 minutes with an aqueous solution separately prepared by dissolving 1.43 g of ammonium chloride in 50 g of pure water, to have silver chloride carried on the aluminium oxide hydrate particles. After aged for 60 minutes, the resulting mixture was filtered off, washed, dried at a temperature of 120°C, furthermore calcined for 60 minutes at a temperature of 450°C and then pulverized to obtain a silver chloride-on-alumina catalyst containing 3.0% by weight of silver in terms of silver. The composition of this catalyst, the content of silver in terms of silver, and the raw material for the alumina are shown in Table 1.

Then 45 g of this catalyst, 100 g of pure water, 2.25 g of acetic acid and 21.4 g of alumina sol (containing 10.5 weight % of alumina; this being also applicable to the following Examples and Comparative Examples) were mixed together under agitating to obtain a mixture. The catalyst therein was pulverized with a wet-type pulverizer into particles having a median diameter of 8.5 $\mu$m, to prepare an aqueous slurry containing 28.0 weight % of solids. The slurry so prepared was measured for its viscosity with the result of 15 cps.

A honeycomb structure made of cordierite and having 400 cells/inch$^2$, a diameter of 20 mm and a height of 16 mm was dipped in said slurry, withdrawn from the slurry, freed of an excess of the slurry remaining in the cells by the use of pressurized air, twice dried at a temperature in a range from 190 to 200°C and finally calcined for 90 minutes at a temperature of 600°C, thereby to obtain a honeycomb catalyst for removing nitrogen oxides.

The honeycomb catalyst so obtained was used to make a test for removing nitrogen oxides according to the following procedure. This test was made by packing said honeycomb catalyst in a reaction tube made from stainless steel and then heating the catalyst to a predetermined temperature while flowing a gas having the following composition therethrough. The measurements for rates of removal of nitrogen oxides with the catalyst were made by maintaining the catalyst at each of various predetermined reaction temperatures for 60 minutes to compare its dependencies for activity of removal of nitrogen oxides on the respective reaction temperatures. The results are shown in Table 2. This catalyst was tested for its service life after the lapse of each of various predetermined test times (hours) by maintaining the catalyst at a reaction temperature of 450°C for up to 200 hours in the atmosphere of a reaction gas having the following composition and under the following reaction conditions. The results are shown in Table 3.

(Composition of reaction gas)

| | |
|---|---|
| NO | 1,000 ppm |
| $SO_2$ | 80 ppm |
| $O_2$ | 10 volume % |
| $H_2O$ | 10 volume % |
| $C_2H_5OH$ | 1,563 ppm |
| $N_2$ | Balance |

(Conditions for reaction)

| | |
|---|---|
| Weight ratio of $C_2H_5OH$ to NO : | 3 |
| GHSV: | 20,000 Hr$^{-1}$ |

The concentration of nitrogen oxides was measured with a chemiluminescent analyzer for nitrogen oxides by sampling the reaction gas having passed through the catalyst layer at the predetermined reaction temperature and analyzing the reaction gas so sampled. The removal rate of nitrogen oxides was calculated through the following equation:

Removal rate (%) = [(1,000 ppm - Concentration of nitrogen oxides at the exit of the
reaction tube)/ Concentration of nitrogen oxides in the feed reaction gas, 1,000 ppm] x 100


Example 2

23.3 g of silver nitrate were added to and dissolved in 250 g of pure water to obtain a solution. The solution so obtained was kept at a temperature of 40°C, incorporated with 100 g of powders alumina obtained by calcining at 550°C for 3 hours aluminium oxide hydrate generated by hydrolysis of aluminium isopropoxide and then agitated for suspending the powdered alumina in the solution to obtain a suspension. An aqueous solution separately prepared by dissolving 8.0 g of sodium carbonate in 50 g of pure water was added to the thus obtained suspension over a period of time of 15 minutes to have silver carbonate carried on the alumina particles. After aged for 60 minutes, the mixture was filtered, washed, dried at a temperature of 120°C and then calcined at a temperature of 450°C and pulverized to obtain a silver oxide-on-alumina catalyst containing 12.5 weight % of silver in terms of silver. The composition of this catalyst, the content of silver in terms of silver, and the kind of raw material for the alumina are shown in Table 1.

Then 65 g of this catalyst, 100 g of pure water, 2.0 g of acetic acid and 18.6 g of alumina sol were mixed and agitated and then pulverized with a wet-type pulverizer, thereby to adjust the median diameter of the resulting catalyst particles to 10.5 μm, thus obtaining an aqueous slurry containing solids in an amount of 36.1 weight % and having a viscosity of 58 cps.

The slurry was coated on the surface of cells of a honeycomb structure according to the same method as employed in Example 1 and finally calcined at 600°C for 90 minutes to obtain a honeycomb catalyst. This honeycomb catalyst was tested for removal of nitrogen oxides according to the same method as employed in Example 1. The results are shown in Tables 2 and 3.


Example 3

170 g of powder of aluminium oxide hydrate generated by hydrolysis of aluminium ethoxide were suspended in 530 g of an aqueous solution of silica sol containing 22.5g of $SiO_2$ in terms of $SiO_2$, suspended under agitation to obtain a slurry. This slurry was spray-dried and then calcined at a temperature of 550°C for 3 hours to prepare a silica-alumina powder carrier containing 15 weight % of silica.

4.93 g of silver nitrate were dissolved in 500 g of pure water. The resulting solution was kept at a temperature of 40°C, incorporated with 100 g of said silica-alumina powder carrier containing 15 weight % of silica and then agitated to obtain a slurry. Then an aqueous solution separately prepared by dissolving 2.26 g of sodium sulfate in 50 g of pure water was added to said slurry over a period of time of 15 minutes to have silver sulfate carried on the silica-alumina particles. The whole was aged for 60 minutes, filtered, washed, dried at a temperature of 120°C, calcined at a temperature of 450°C and then pulverized to obtain a silver sulfate-on-silica-alumina catalyst containing 3.0 weight % of silver in terms of silver. The composition of this catalyst, the content of silver in terms of silver, and the kind of raw material for the alumina are shown in Table 1.

Then 50 g of this catalyst, 100 g of pure water, 2.5 g of acetic acid and 23.8 g of alumina sol were mixed together under agitation, after which the resulting mixture was treated with a wet-type pulverizer so that the median diameter of the resulting particles would be adjusted to 3.5 μm thereby to prepare an aqueous slurry containing 29.8 weight % of solids. This slurry was measured for its viscosity and found to have 21 cps.

This slurry was applied onto the surface of cells of a honeycomb structure according to the same procedure as employed in Example 1, and finally calcined at a temperature of 600°C for 90 minutes, thereby to prepare a honeycomb catalyst. This honeycomb catalyst was tested for its capability of removing nitrogen oxides according to the same method as employed in Example 1. The results are shown in Tables 2 and 3.


Example 4

4.14 g of silver nitrate were added to and dissolved in 500 g of pure water. The resulting solution was kept under a temperature of 40°C, and then 100 g of powder of aluminium oxide hydrate generated by hydrolysis of aluminium-t-butoxide were added to and agitated and suspended in the solution. The suspesion was evaporated to dryness under heating, dried at a temperature of 120°C, calcined at a temperature of 450°C and then pulverized to obtain a silver oxide-on-alumina catalyst containing silver in an amount of 3.4 weight % in terms of silver. The composition of this catalyst, the content of silver in terms of silver, and the raw material for the alumina are shown in Table 1.

Then 65 g of this catalyst, 100 g of pure water, 2.0 g of acetic acid and 18.6 g of alumina sol were mixed together under agitation to obtain a mixture which was then pulverized with a wet-type pulverizer to adjust the particle size of the resulting particles to 10.5 μm thereby to prepare an aqueous slurry containing 36.1 weight % of solids. The thus prepared slurry was measured for its viscosity and found to have 58 cps.

This slurry was coated on the surface of cells of a honeycomb structure according to the same procedure as in Example 1, and finally calcined at a temperature of 600°C for 90 minutes to obtain a honeycomb catalyst which was then tested for its capability of removing nitrogen oxides according to the same method as employed in Example 1. The results are shown in Tables 2 to 3.

Example 5

Sulfuric acid was added to an aqueous solution of sodium aluminate to neutralize the solution, and the resultant precipitate of aluminium oxide hydrate was washed, dried, pulverized and then calcined at a temperature of 550°C thereby to prepare alumina powder. 100 g of the thus prepared alumina powder were suspended and agitated in a silica sol aqueous solution containing 7.53 g of $SiO_2$, after which the resulting slurry was spray-dried to prepare a silica • alumina powder carrier containing 7.0 weight % of $SiO_2$.

4.93 g of silver nitrate were added to and dissolved in 500 g of pure water. The solution so obtained kept at a temperature of 40°C was incorporated with 100 g of said silica-alumina powder carrier containing 7.0 weight % of $SiO_2$ and then agitated for suspending the powdery carrier in the solution. Then an aqueous solution separately prepared by dissolving 1.72 g of ammonium chloride in 50 g of pure water was added to the resulting suspension over a period of time of 15 minutes to have silver chloride carried on the particles of the silica-alumina. The whole was aged for 60 minutes, filtered, washed, dried at a temperature of 120°C, calcined at a temperature of 450°C for 60 minutes and then pulverized thereby to obtain a silver chloride-on-silica-alumina catalyst containing 3.0 weight % of silver in terms of silver.

Then, 50 g of this catalyst, 100 g of pure water, 2.5 g of acetic acid, and 23.8 g of alumina sol (containing 10.5 weight % of alumina; the same being applicable to the following Comparative Examples) were mixed and agitated to obtain a mixture which was then ground or pulverized by a wet-type pulverizer to adjust the median diameter of the catalyst to 5.6 μm, thereby to obtain an aqueous slurry containing 30.1 weight % of solids. The sulrry so obtained was measured for its viscosity and found to have a viscosity of 43 cps.

This slurry was coated on the surface of cells of a honeycomb structure according to the same procedure as in Example 1, and finally calcined at a temperature of 600°C for 90 minutes to prepare a honeycomb catalyst which was then tested for its capability of removing nitrogen oxides according to the same method as employed in Example 1. The results are shown in Tables 2 and 3. In addition, the surface areas of the catalyst respectively at treating temperatures are shown in Table 4.

Comparative Example 1

An aqueous solution of sulfuric acid was added to an aqueous solution of sodium aluminate to neutralize the latter solution to obtain a precipitate of aluminium oxide hydrate which was then washed, dried, pulverized and then calcined at a temperature of 550°C for 4 hours thereby to obtain an alumina powder carrier.

Then 4.93 g of silver nitrate were dissolved in 500 g of pure water. The resulting solution kept at a temperature of 40°C was incorporated with 100 g of the alumina powder carrier prepared previously, agitated for suspending the alumina powder in the solution. Then an aqueous solution separately prepared by dissolving 1.72 g of ammonium chloride in 50 g of pure water was added to the resulting suspension over a period of time of 15 minutes to have silver chloride carried on the alumina particles. The whole was aged for 60 minutes, filtered, washed, dried at a temperature of 120°C, calcined at a temperature of 450°C, and then pulverized to obtain a silver chloride-on-alumina catalyst containing 3.0 weight % of silver in terms of silver. The composition of this catalyst, the content of silver in terms of silver, and the raw material for the alumina are shown in Table 1.

Then 50 g of this catalyst, 100 g of pure water, 2.5 g of acetic acid, and 23.8 g of alumina sol were mixed together under agitation and then pulverized by a wet-type pulverizer to adjust the median diameter of the catalyst to 6.1 μm, to obtain an aqueous slurry containing 27.8 weight % of solids. The slurry was measured for its viscosity with the result being 36 cps.

This slurry was coated on the surface of cells of a honeycomb structure according to the same procedure as in Example 1 and then calcined at a temperature of 600°C for 90 minutes to prepare a honeycomb catalyst. The catalyst so prepared was tested for its performance of removing nitrogen oxides according to the same method as employed in Example 1. The results are shown in Tables 2 and 3. Further, the surface areas of this catalyst respectively at treating temperatures are shown in Table 4.

Comparative Example 2

Ammonia water was added to an aqueous solution of aluminium sulfate to neutralize the solution, and the resulting precipitate of aluminium oxide hydrate was washed, dried, pulverized and then calcined at a temperature of 550°C for 4 hours to obtain an alumina powder carrier.

Then 4.93 g of silver nitrate was added to and dissolved in 500 g of pure water to obtain a solution. The thus obtained solution kept at a temperature of 40°C was incorporated with 100 g of the previously prepared alumina powder carrier and then agitated for suspending the powder carrier in the solution. An aqueous solution separately prepared by dissolving 1.72 g of ammonium chloride in 50 g of pure water was added to the resulting suspension over a period of time of 15 minutes to have silver chloride carried on the alumina particles. The whole was aged for 60 minutes, filtered, washed, dried at a temperature of 120°C, calcined at a temperature of 450°C and then pulverized to obtain a silver chloride-on-alumina catalyst containing silver in an amount of 3.0 weight % in terms of silver. The composition of this catalyst, the content of silver in terms of silver, and alumina are shown in Table 1.

Then 50 g of this catalyst, 100 g of pure water, 2.5 g of acetic acid and 23.8 g of alumina sol were mixed together under agitation, pulverized with a wet-type pulverizer to adjust the median diameter of the catalyst to 6.1 µm thereby to prepare an aqueous slurry containing 27.8 weight % of solids. The catalyst so prepared was measured for its viscosity and found to have 36 cps.

Then this slurry was coated on the surface of cells of a honeycomb structure according to the same procedure as in Example 1 and then calcined at a temperature of 600°C for 90 minutes to prepare a honeycomb catalyst. The catalyst was tested for its capability of removing nitrogen oxides according to the same method as employed in Example 1. The results are shown in Tables 2 to 3.

Comparative Example 3

Ammonia water was added to an aqueous solution of aluminium sulfate to neutralize the solution, thereby to obtain a precipitate of aluminium oxide hydrate which was washed and then dried to obtain aluminium oxide hydrate as a carrier.

3.70 g of silver nitrate were added to and dissolved in 250 g of pure water. The resulting solution kept at a temperature of 40°C was incorporated with 100 g of the previously prepared aluminium oxide hydrate and then agitated to obtain a suspension. Then an aqueous solution separately prepared by dissolving 1.70 g of sodium sulfate in 50 g of pure water was added to the suspension described above over a period of time of 15 minutes to have silver sulfate carried on the particulate aluminium oxide hydrate. The whole was aged for 60 minutes, filtered, washed, dried at a temperature of 120°C, calcined at a temperature of 450°C and then pulverized to obtain a silver sulfate-on-alumina catalyst containing 3.0 weight % of silver in terms of silver. The composition of this catalyst, the content of silver in terms of silver and the raw material for the alumina are shown in Table 1.

Then 45 g of this catalyst, 100 g of pure water, 2.25 g of acetic acid and 21.4 g of alumina sol were mixed together under agitation, pulverized by a wet-type pulverizer to adjust the median diameter of the catalyst to 7.5 µm thereby to prepare an aqueous slurry containing solids in an amount of 26.5 weight %, which was measured for its viscosity and found to have 28 cps.

This slurry was coated on the surface of cells of a honeycomb structure according to the same procedure as in Example 1, and finally calcined at a temperature of 600°C for 90 minutes to prepare a honeycomb catalyst. The catalyst was tested for its capability of removing nitrogen oxides according to the same method as employed in Example 1. The results are shown in Tables 2 and 3.

Table 1

| Example Comp. Ex. | Composition of Catalyst | Content of Silver (wt %), in terms of Silver | Raw Material for Alumina |
|---|---|---|---|
| Ex. 1 | silver chloride -on-alumina | 3.0 | aluminium isopropoxide |
| Ex. 2 | silver oxide -on-alumina | 12.5 | aluminium isopropoxide |
| Ex. 3 | silver sulfate -on-silica-alumina | 3.0 | aluminium ethoxide |
| Ex. 4 | silver oxide -on-alumina | 3.4 | aluminium -t-butoxide |
| Comp. Ex. 1 | silver chloride -on-alumina | 3.0 | sodium aluminate |
| Comp. Ex. 2 | silver chloride -on-alumina | 3.0 | aluminium sulfate |
| Comp. Ex. 3 | silver sulfate -on-alumina | 3.0 | aluminium sulfate |

Table 2

| Example Comp. Ex. | Rate of Removal of Nitrogen Oxides (%) | | | |
|---|---|---|---|---|
| | 350°C | 400°C | 450°C | 500°C |
| Example 1 | 80.3 | 85.2 | 89.7 | 88.3 |
| Example 2 | 74.4 | 79.3 | 83.9 | 81.1 |
| Example 3 | 82.4 | 86.1 | 91.7 | 90.5 |
| Example 4 | 83.6 | 84.3 | 82.6 | 80.5 |
| Example 5 | 69.2 | 74.4 | 75.0 | 71.8 |
| Comp. Ex. 1 | 47.8 | 53.1 | 51.3 | 49.1 |
| Comp. Ex. 2 | 44.0 | 50.7 | 51.4 | 46.8 |
| Comp. Ex. 3 | 43.7 | 45.5 | 48.9 | 45.3 |

Table 3

| Example Comp. Ex. | Rate of Removal of Nitrogen Oxides (%) | | | | |
|---|---|---|---|---|---|
| | 2hr | 25hr | 50hr | 100hr | 200hr |
| Example 1 | 89.6 | 85.5 | 83.4 | 83.0 | 82.0 |
| Example 2 | 83.5 | 79.8 | 77.6 | 76.1 | 75.0 |
| Example 3 | 91.7 | 87.5 | 86.5 | 87.0 | 86.6 |
| Example 4 | 82.6 | 74.1 | 72.4 | 71.8 | 71.3 |
| Example 5 | 75.2 | 66.9 | 64.6 | 62.5 | 61.4 |
| Comp. Ex.1 | 50.5 | 33.6 | 23.5 | 21.7 | 19.1 |
| Comp. Ex.2 | 51.1 | 31.8 | 21.4 | 17.0 | 15.7 |
| Comp. Ex.3 | 48.3 | 32.2 | 20.3 | 15.4 | 15.5 |

Table 4

| Example Comp. Ex | Surface Area ($m^2$/g) | | | | |
|---|---|---|---|---|---|
| | 500°C | 600°C | 700°C | 800°C | 900°C |
| Example 5 | 245 | 238 | 225 | 206 | 165 |
| Comp. Ex.1 | 236 | 215 | 182 | 141 | 104 |

As is so far described, when used the catalyst of the present invention will enable efficient removal of nitrogen oxides in a high oxygen atmosphere containing sulfer oxides and even at a high temperature as well as stable maintenance of its service life for a long period time and it will also enable economical reduction to be effected while suppressing complete oxidation of the added hydrocarbons and oxygen-containing organic compounds as the reducing agents. This results that not only the efficiency of removal of nitrogen oxides is inhibited from decreasing even when sulfur oxides coexist in the removal system but also the long-term maintenance of the removal efficiency at a high temperature is enabled, and further results that in the case of the silca-alumina containing a predetermined amount of silica, the alumina is prevented from decreasing in its surface area thereby to enhance the catalyst in heat resistance.

**Claims**

1. A catalyst for removing nitrogen oxides used in the presence of hydrocarbons or oxygen-containing organic compounds, which comprises alumina as a porous heat-resistant carrier, prepared by hydrolysis of an organic aluminium compound and at least one member as an active component, selected from the group consisting of silver and silver compounds and carried on said carrier.

2. The catalyst according to Claim 1, wherein said porous heat-resistant carrier contains silica in an amount of up to 15 weight %.

3. The catalyst according to Claim 1, wherein said at least one active component is contained in an amount of 0.01 to 20.0 weight % in terms of silver.

4. The catalyst according to Claim 1, wherein said organic aluminium compound is an aluminium alcoholate.

5. The catalyst according to Claim 4, wherein said aluminium alcoholate is one member selected from the group consisting of aluminium isopropoxide, aluminium ethoxide and aluminium-t-butoxide.

6. The catalyst according to Claim 1, wherein said silver compound is one member selected from the group consisting of silver chloride, silver bromide, silver sulfate, silver phosphate and silver oxide.

7. A catalyst for removing nitrogen oxides used in the presence of hydrocarbons or oxygen-containing organic compounds, which comprises silica-alumina as a porous heat-resistant carrier, containing silica in an amount of 0.5 to 15 weight % and at least one member as an active component, selected from the group consisting of silver and silver compounds and carried on said carrier.

8. The catalyst according to Claim 7 wherein said at least one active component is contained in an amount of 0.01 to 20.0 weight % in terms of silver.

9. The catalyst according to Claim 7, wherein said silver compound is one member selected from the group consising of silver chloride, silver bromide, silver sulfate, silver phosphate and silver oxide.

| | European Patent Office | **EUROPEAN SEARCH REPORT** | Application Number EP 96 10 2088 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| P,X | EP 0 682 975 A (RIKEN KK) 22 November 1995 * page 5, line 21 - line 56; claims 1-14; examples * | 7-9 | B01D53/94 B01J37/03 B01J21/04 B01J23/50 |
| Y | | 2,6 | |
| X | EP 0 526 099 A (RIKEN KK ;AGENCY IND SCIENCE TECHN (JP)) 3 February 1993 * page 5, line 34 - page 6, line 18; claims 1-18 * | 1,3-5 | |
| Y | | 2,6 | |
| X | US 5 384 110 A (MURAMATSU GYO  ET AL) 24 January 1995 * column 5, line 7 - line 13 * * column 6, line 13 - line 68; examples 8,11 * | 1,3-6 | |
| A | US 5 242 883 A (ICHIKAWA SATOSHI  ET AL) 7 September 1993 * the whole document * | 1,4,5 | |
| A | DE 44 05 876 A (SUED CHEMIE AG) 5 October 1995 * column 3, line 40 - column 4, line 14 * * column 5, line 21 - line 33; claims 1-16 * | 1,4,7 | TECHNICAL FIELDS SEARCHED (Int.Cl.6) B01D B01J |

The present search report has been drawn up for all claims

| Place of search | Date of completion of the search | Examiner |
| --- | --- | --- |
| THE HAGUE | 31 January 1997 | Eijkenboom, A |

EPO FORM 1503 03.82 (P04C01)